# EUROPEAN PATENT APPLICATION

(11) **EP 3 222 892 A1**
(43) Date of publication of application: **27.09.2017**
(21) Application number: 15862081.5
(22) Date of filing: 04.11.2015
(51) Int. Cl.: F16J 15/3204, F16F 9/32

(54) **SEAL MEMBER AND FLUIDIC DEVICE WITH SAME**

(30) Priority: 19.11.2014 JP 2014234440
(71) Applicant: KYB Corporation, Tokyo 105-6111 (JP)
(72) Inventor: KATO, Shinji, Tokyo 105-6111 (JP)
(74) Representative: Müller-Boré & Partner Patentanwälte PartG mbB
(86) International application number: PCT/JP2015/081081
(87) International publication number: WO 2016/080189

(57) **Abstract**

Providing a sealing member which can successfully scrape off foreign substances and prevent failure caused by incorporation of foreign substances. A dust seal (39) serving as a sealing member includes a dust seal body (36) and a lip member (38) . The dust seal body (36) has a predetermined elasticity and is retained in an opening (25) of an outer tube (21) into which an inner tube (23) reciprocated in a projected state is inserted. The lip member (38) is harder than the dust seal body (36) and is attached to a distal end of the dust seal body (36). The lip member (38) has a distal end which is brought into sliding contact with an outer peripheral surface of the inner tube (23).

## Description

### Technical Field

The present invention relates to a sealing member and a fluid pressure device provided with the sealing member.

### Background Art

Patent Document 1 discloses a conventional sealing device. The sealing device is retained in an opening of an outer tube into which an inner tube reciprocated in a projected state is inserted. The sealing device includes a dust seal and a scraper. The dust seal is made of nitrile rubber and has a dust seal body and a seal lip continuously provided on an inner periphery at the distal end side of the dust seal body. A garter spring is fit onto an outer periphery of the distal end of the seal lip. The garter spring presses an inner peripheral end of the seal lip against the inner tube. The scraper is disposed at the inner side of the dust seal. The scraper is made of fluorine resin and has a scraper body and a lip continuously provided on an inner periphery of the scraper body. The lip is formed so that an inner circumference thereof has a diameter smaller than an outer diameter of the inner tube. Furthermore, the lip has a hardness set to be higher than that of the seal lip. In this sealing device, the lip of the scraper can scrape off a foreign substance which is adhered to the outer periphery of the inner tube and which has not completely been scraped off by the seal lip.

### Prior Art Document

### Patent Documents

Patent Document 1: Japanese Patent Application Publication NO. JP 2013-96425

### Summary of the Invention

### Problem to Be Overcome By the Invention

However, the dust seal provided in the sealing device of patent document 1 is elastically deformable since it is made of nitrile rubber. Accordingly, there is a possibility that a foreign substance such as mud firmly adherent to the outer periphery of the inner tube cannot be scraped off by the seal lip. Furthermore, there is a possibility that the scraper would be damaged by the foreign substance which cannot be scraped off by the seal lip. In this case, the foreign substance might enter the outer tube and the inner tube thereby to result in occurrence of failure.

The present invention was made in view of the foregoing prior art circumstances and an object thereof is to provide a sealing member which can successfully scrape off foreign substances and prevent failure caused by incorporation of foreign substances.

### Means for Overcoming the Problem

A sealing member in accordance with the present invention includes a seal body and a lip member. The seal body has a predetermined elasticity and is retained in an opening of a body into which a moving body reciprocated in a projected state. The lip member is attached to a distal end of the seal body and having a distal end which is brought into sliding contact with a side surface of the moving body. The lip member is harder than the seal body.

In the sealing member in accordance with the invention, at least one of the distal end of the lip member and the moving body may be covered with a film harder than the lip member.

Furthermore, a fluid pressure device may include the sealing member in accordance with the invention. An operating fluid is encapsulated in the body.

### Description of the Drawings

Fig. 1 is a partial cross section of a major part of a front fork provided with a dust seal which is the sealing member of a first embodiment;
Fig. 2 is a cross section of the dust seal of the first embodiment;
Fig. 3 is a cross section of the dust seal where the distal end of the lip member has a semicircular cross section;
Fig. 4 is a cross section of the dust seal where a distal end of the lip member, in a sectional configuration, is pointed at the inner peripheral surface side;
Fig. 5 is a cross section of the dust seal where a distal end of the lip member, in a sectional configuration, is pointed at the outer peripheral surface side; and
Fig. 6 is a cross section of the dust seal where a distal end of the lip member is brought into face-to-face contact with an outer peripheral surface of the inner tube.

### Best Mode for Carrying Out the Invention

A first embodiment of a fluid pressure device provided with the sealing member in accordance with the invention will be described with reference to the drawings.

### <First Embodiment>

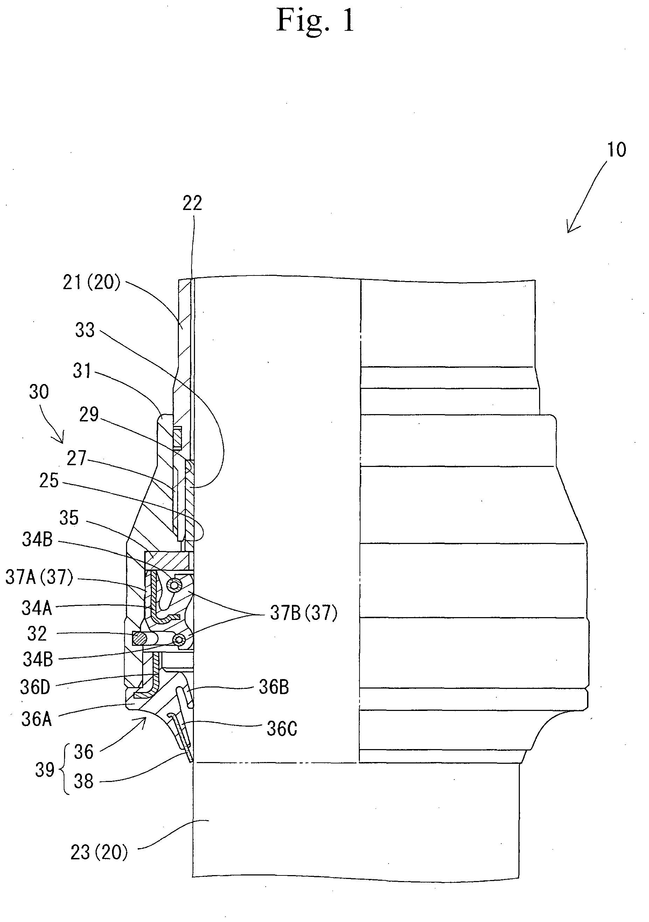

The fluid pressure device of the first embodiment is an inverted front fork 10 functioning as a damper which suspends a front wheel of a two-wheel vehicle and damps road vibration input to the front wheel. The front fork 10 has a suspension body 20, a damper (not illustrated), and a sealing device 30 as shown in Fig. 1. The suspension body 20 includes an outer tube 21 and an inner tube 23. The damper is housed in the suspension body 20 to suppress expansion/contraction motion.

The outer tube 21 is cylindrical in shape and has a lower end formed with an opening 25. The lower end of the outer tube 21 has an outer peripheral surface formed with a thread groove 27 into which a seal case 31 is screwed as will be described later. Furthermore, the lower end of the outer tube 21 has an inner peripheral surface formed with a stepped part 29 into which a slide bearing 33 is fitted as will be described later.

The inner tube 23 is inserted into the opening 25 of the outer tube 21 and reciprocated in a projected state. Thus, the front fork 10 having the outer tube 21 and the inner tube 23 is expandable/contractible.

The front fork 10 has a reservoir (not illustrated) formed between the suspension body 20 and the damper. The reservoir stores an operating fluid and a gas to provide the damper with temperature compensation and volume compensation. The operating fluid is water, glycol solution, oil, or the like. The gas is an inert gas such as nitrogen.

The suspension body 20 has a cylindrical gap 22 defined between overlapping parts of the outer tube 21 and the inner tube 23. The sealing device 30 closes the gap 22. As a result, the operating fluid in the reservoir is prevented from leaking out of the suspension body 20 in the front fork 10.

The sealing device 30 has a seal case 31, a slide bearing 33, a holder 35, an oil seal 37, and a dust seal 39 serving as a sealing member. The slide bearing 33 is cylindrical in shape and is fitted in the stepped part 29 provided in the inner peripheral surface of the lower end of the outer tube 21. The slide bearing 33 has an inner peripheral surface which is brought into sliding contact with the outer peripheral surface of the inner tube 23 , whereby the inner tube 23 is allowed to reciprocate smoothly.

The holder 35 is annular in shape and is retained on the seal case 31. The holder 35 abuts against a lower end surface of the slide bearing 33 while the seal case 31 is screwed into the thread groove 27 formed in the outer peripheral surface of the lower end of the outer tube 21, thereby preventing displacement of the slide bearing 33.

The oil seal 37 is disposed below the holder 35 and is retained on the seal case 31 by a snap ring 32 fitted with the inner periphery of the seal case 31, so as not to drop out of a predetermined position. The oil seal 37 is annular in shape. The oil seal 37 is made of nitrile rubber and has elasticity. Furthermore, the oil seal 37 has an outer periphery 37A and a lip part 37B. A substantially cylindrical member 34A made of stainless steel is inserted into the outer periphery 37A. The outer periphery 37A has a lower end which is bent to the inner peripheral side thereof and from which the lip part 37B extends in the up-down direction. In this oil seal 37, two garter springs 34B are fitted on outer peripheries of an upper end and a lower end of the lip part 37B respectively, so that inner peripheral surfaces of the upper end and the lower end of the lip part 37B are in sliding contact with the outer peripheral surface of the inner tube 23. Thus, the oil seal 37 prevents the operating fluid in the reservoir from leaking outside from the suspension body 20.

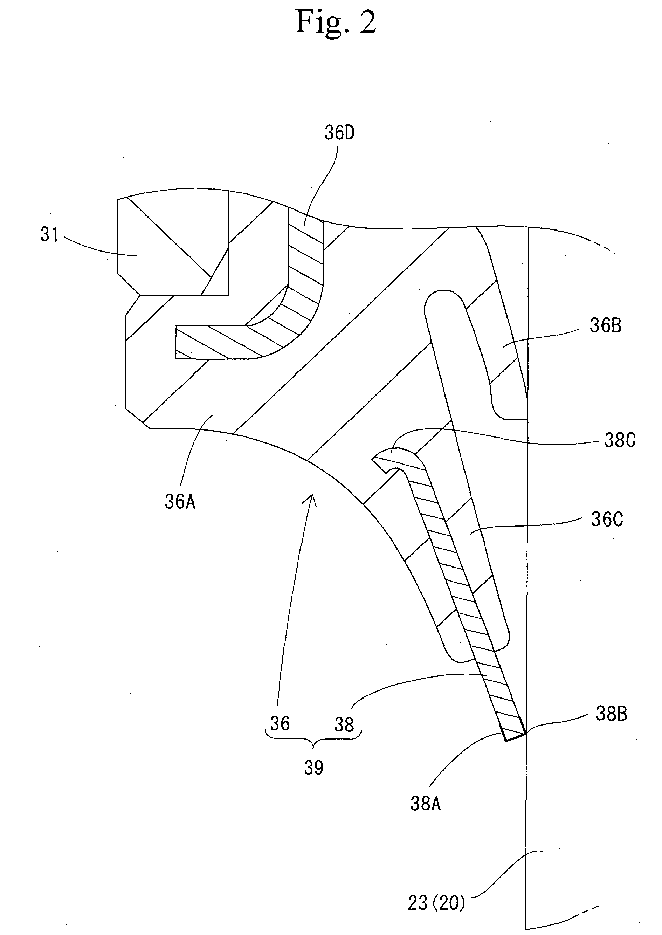

The dust seal 39 includes a dust seal body 36 and a lip member 38 as illustrated in Figs. 1 and 2. The dust seal body 36 is annular in shape. Furthermore, the dust seal body 36 is made of nitrile rubber and is accordingly elastic. The dust seal body 36 has a base 36A, a first lip part 36B, and a second lip part 36C. A substantially cylindrical member 36D made of stainless steel is inserted into the base 36A thereby to be retained on the inner peripheral surface of the lower end of the seal case 31. The first lip part 36B extends aslant inwardly downward from a middle part of the inner peripheral surface of the base 36A and has a distal end in sliding contact with the outer peripheral surface of the inner tube 23. The second lip part 36C extends aslant inwardly downward from the lower end of the inner peripheral surface of the base 3 6A. Thus, the dust seal body 36 is retained via the seal case 31 in the opening 25 of the outer tube 21.

The lip member 38 is substantially cylindrical in shape and has a diameter which is gradually reduced downward. Furthermore, the lip member 38 is made of stainless steel and is accordingly harder than the dust seal body 36. The lip member 38 is attached integrally to the second lip part 36C of the dust seal body 36 by insert molding. The lip member 38 has a proximal end 38C at an upper end thereof formed so as to be curved to spread outward. As a result, the lip member 38 is less likely to drop out of the dust seal body 36. The lip member 38 has a distal end at a lower end thereof with a distal end surface formed to be orthogonal to outer and inner peripheries thereof. Diamond-like carbon (DLC) coating 38A is applied to the distal end of the lip member 38 as illustrated in Fig. 2. In other words, the distal end at the lower end of the lip member 38 is covered with a film harder than the lip member 38. The distal end at the lower end of the lip member 38 has an inner corner 38B formed to have an inner peripheral diameter that is substantially equal to an outer diameter of the inner tube 23. As a result, the inner corner 38B of the distal end at the lower end of the lip member 38 is brought into sliding contact with an outer peripheral surface of the inner tube 23.

Thus, the dust seal 39 provided on the front fork 10 includes the dust seal body 36 and the lip member 38. The dust seal body 36 is elastic and is retained via the seal case 31 in the opening 25 of the outer tube 21 into which the inner tube 23 is inserted, which inner tube is reciprocated in the projected state. The lip member 38 is made of stainless steel and is attached to the distal end of the seal body 36. The inner corner 38B of the distal end of the lip member 38 is brought into sliding contact with the outer peripheral surface of the inner tube 23.

The lip member 38 is harder than the dust seal body 36. Accordingly, the dust seal 39 is less likely to be deformed (or to open) even when the distal end thereof is slid on the side surface of the inner tube 23, with the result that the dust seal 39 can successfully scrape off a foreign substance, such as mud, adhered to the outer peripheral surface of the inner tube 23. Furthermore, the dust seal 39 has the stainless lip member 38 attached to the distal end of the elastic dust seal body 36. Accordingly, the dust seal 39 can be slid without any gap between inner corner 38B of the distal end of the lip member 38 and the outer peripheral surface of the inner tube 23 while following displacement of the inner tube 23 during reciprocation of the inner tube 23, and furthermore, the dust seal 39 is less likely to damage the outer peripheral surface of the inner tube 23. Thus, the dust seal 39 can successfully scrape off even foreign substance, such as mud, firmly fixed to the outer peripheral surface of the inner tube 23.

Accordingly, the dust seal 39 and the front fork 10 provided with the dust seal 39 in the first embodiment can successfully scrape off the foreign substance such as mud and can prevent failure caused by incorporation of a foreign substance such as mud into the operating fluid or leakage of the operating fluid.

Furthermore, the DLC coating 38A is applied to the distal end of the lip member 38. As a result, the dust seal 39 has high slidability, high wear and abrasion resistance, and low aggressivity. In other words, the distal end of the lip member 38 is smoothly slid on the outer peripheral surface of the inner tube 23 with the result that the distal end of the lip member 38 is less likely to be worn and to damage the side surface of the inner tube 23.

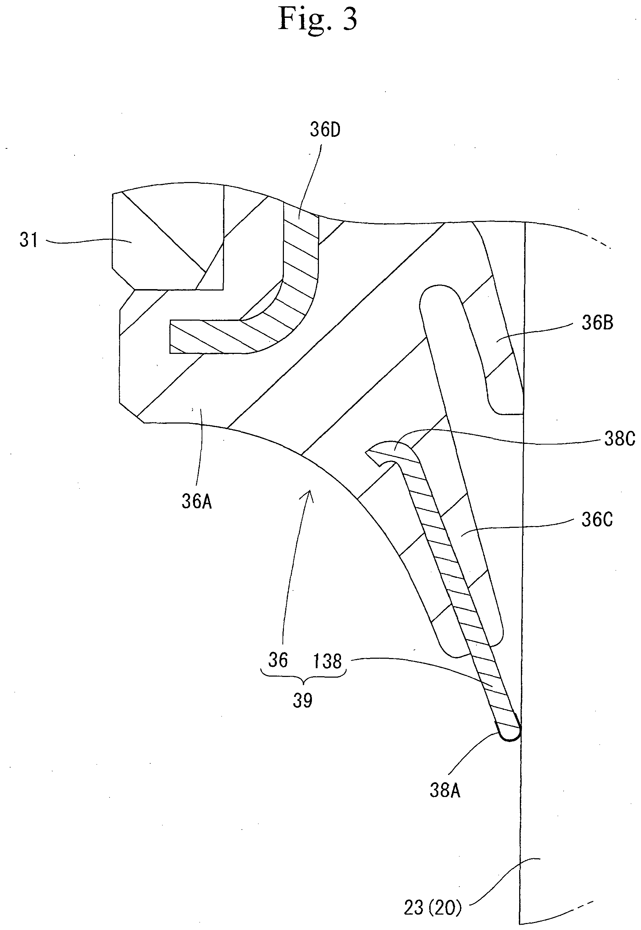

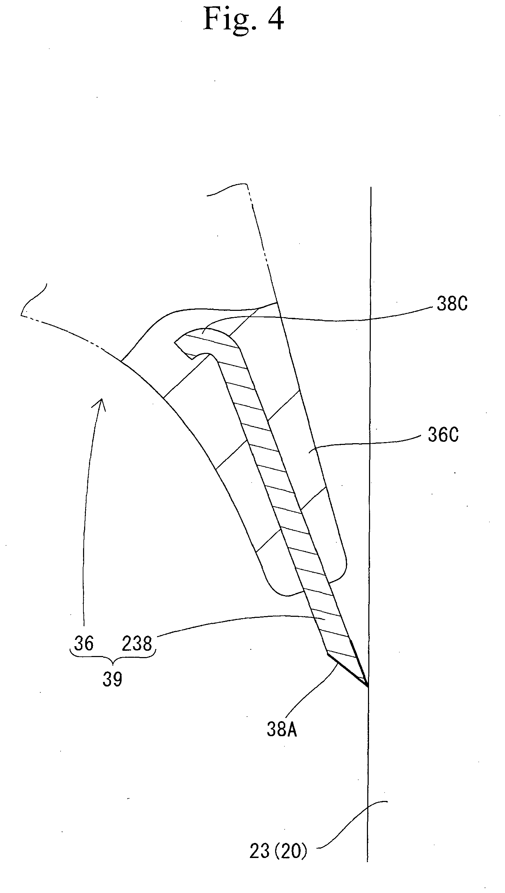

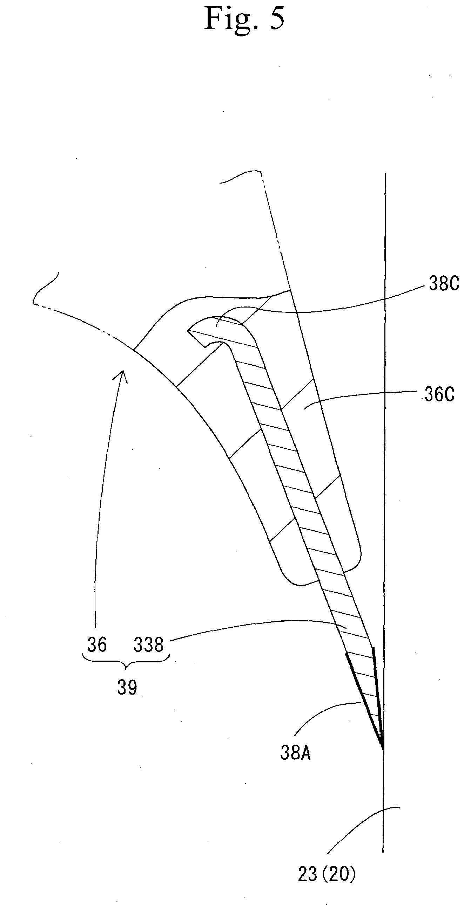

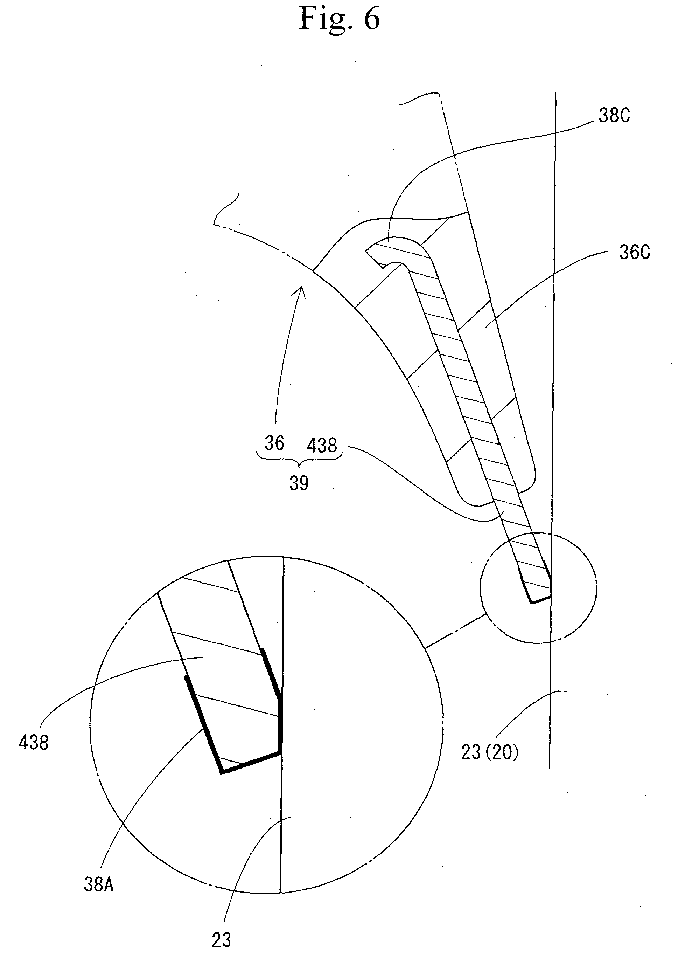

The present invention should not be limited to the first embodiment described above with reference to the drawings, but the technical scope of the invention encompasses the following embodiments, for example.
(1) Various shapes of the distal end of the lip member can be considered as illustrated in Figs. 3 to 6. In other words, a lip member 138 (Fig. 3) may have a distal end with a semicircular cross section, a lip member 238 (Fig. 4) may have a distal end the cross sectional shape of which is inclined from a distal end of the inner peripheral surface at the inner tube 23 side toward the outer peripheral surface thereby to be pointed (the inner peripheral surface side is pointed), a lip member 338 (Fig. 5) may have a distal end the cross sectional shape of which is inclined from a distal end of the outer peripheral surface toward the inner peripheral surface at the inner tube 23 side thereby to be pointed (the outer peripheral surface side is pointed), or a lip member 438 (Fig. 6) may have a shape such that the corner of the inner peripheral surface at the inner tube 23 side is cut out so that the distal end is brought into face-to-face contact with the outer peripheral surface of the inner tube 23. In Figs. 3 to 6, identical or similar constructions are labelled by the same reference symbols as those in the first embodiment.
(2) Although the DLC coating is applied to the distal end of the lip member in the first embodiment, another surface treatment (for example, chromium nitride (CrN) coating, or titanium nitride (TiN) coating) may be applied. On the contrary, the surface treatment such as the DLC coating may not be applied.
(3) Although the DLC coating is applied to only the distal end of the lip member in the first embodiment, surface treatment such as the DLC coating may be applied to the outer peripheral surface of the inner tube as well as the distal end of the lip member.
(4) Although the DLC coating is applied to the distal end of the lip member in the first embodiment, surface treatment such as the DLC coating may not be applied to the distal end of the lip member but applied to only the outer peripheral surface of the inner tube.
(5) Although the dust seal which is a sealing member is applied to the front fork in the first embodiment, the sealing member may be applied to the damper, the cylinder device, or another fluid pressure device. When the sealing member is applied to the damper or the cylinder device, a piston rod serves as the moving body, and a cylinder serves as the body.
(6) Although the lip member is made of stainless steel in the first embodiment, the lip member may be made of any resin having a higher hardness than the sealing body.

### Explanation of Reference Symbols

10 ... front fork (a fluid pressure device), 21 ... outer tube (a body), 23 ... inner tube (a moving body), 25 ... opening, 36 ... dust seal body (seal body), 38 ... lip member, 38A ... diamond-like carbon (DLC) coating (rigid film), 39 ... dust seal (sealing member).

## Claims

1. A sealing member comprising:
a seal body retained in an opening of a body into which a moving body reciprocated in a projected state, the seal body having a predetermined elasticity; and
a lip member attached to a distal end of the seal body and having a distal end which is brought into sliding contact with a side surface of the moving body, the lip member being harder than the seal body.

2. The sealing member according to claim 1, wherein at least one of the distal end of the lip member and the moving body is covered with a film harder than the lip member.

3. A fluid pressure device comprising the sealing member as defined in claim 1, wherein an operating fluid is encapsulated in the body.
